# EUROPEAN PATENT APPLICATION

(11) **EP 4 531 187 A1**
(43) Date of publication of application: **02.04.2025**
(21) Application number: 23866680.4
(22) Date of filing: 08.03.2023
(51) Int. Cl.: H01M 50/342, H01M 50/147, H01M 50/183

(54) **BATTERY COVER PLATE HAVING EXPLOSION-PROOF VALVE CONNECTED BY MEANS OF PLASTIC**

(30) Priority: 22.02.2023 CN 202320276267 U
(71) Applicant: Suzhou Mayer New Energy Co., Ltd, Suzhou, Jiangsu 215106 (CN)
(72) Inventor: KONG, Donggen, 4088, Jiangsu 215106 (CN)
(74) Representative: Cabinet Chaillot
(86) International application number: PCT/CN2023/080288
(87) International publication number: WO 2024/174295

(57) **Abstract**

The embodiments of the invention disclose a battery cover connected to an explosion-proof valve by plastic to solve the problems that existing battery covers have high precision and welding requirements for parts when manufactured, the high temperature has an annealing effect on materials of explosion-proof pieces to different extent, leading to a large explosion-proof tolerance, and the complex welding process results in a high manufacturing cost. The battery cover comprises a cover body, a mounting opening is formed in the cover body, an explosion-proof valve is mounted in the mounting opening, at least one bursting line is arranged on at least one surface of the explosion-proof valve, the explosion-proof valve is provided with a first injection molding surface located on an outer side of the bursting line, and a plastic layer obtained by injection molding is arranged on the first injection molding surface and a second injection molding surface of the mounting opening. In the battery cover of the present application, an existing connecting and fixing process based on laser welding in the industry is replaced, avoiding negative influences caused by a high temperature during the laser welding process, realizing a stable explosion-proof value, and increasing the yield and reducing the manufacturing cost.

## Description

### CROSS-REFERENCE TO RELATED APPLICATIONS

The application is proposed based on and claims priority to Chinese Patent Application No. 202320276267.8, filed on February 22, 2023, which is incorporated herein by reference in its entirety.

### FIELD

The invention relates to the technical field of battery covers, in particular to a battery cover connected to an explosion-proof valve by plastic.

### BACKGROUND

Battery covers, as an important part of batteries, have a complex structure, typically comprise an explosion-proof piece, a flip piece, terminal posts and other parts, and are generally manufactured by stamping, welding, injection molding or other production processes, and a housing is generally manufactured by stamping, drawing or other production processes. The covers mainly function for fixing/sealing, current conduction, pressure relief, fuse protection, and corrosion reduction. Explosion-proof valves on all existing square or circular battery covers in the industry are generally made from aluminum and fixed to cover bodies by welding after being formed by stamping.

Traditional battery covers have high precision and welding requirements for parts when manufactured, while the welding process is an intermediate or back-end process, defects appearing during which will lead to failures of related parts and processes, thus leading to a serious loss and a decrease of the overall qualification rate of products. The high temperature during the welding process has an annealing effect on materials of the explosion-proof pieces to different extents, resulting in a large explosion-proof tolerance which is commonly ±0.2MPa; and the complex welding process leads to a high manufacturing cost. Therefore, the invention provides a battery cover connected to an explosion-proof valve by plastic.

### SUMMARY

The objective of the embodiments of the invention is to provide a battery cover connected to an explosion-proof valve by plastic to solve the problems proposed in the background.

To fulfil the above objective, the embodiments of the invention adopt the following technical solution:

A battery cover connected to an explosion-proof valve by plastic, comprising a cover body, wherein a mounting opening is defined in the cover body, the explosion-proof valve is mounted in the mounting opening, at least one bursting line is arranged on at least one surface of the explosion-proof valve, the explosion-proof valve is provided with a first injection molding surface located on an outer side of the bursting line, and a plastic layer obtained by injection molding is arranged on the first injection molding surface and a second injection molding surface of the mounting opening and seals the mounting opening together with the explosion-proof valve.

In one embodiment, the mounting opening is provided with a step, the explosion-proof valve is arranged on the step, and the first injection molding surface is arranged on a surface, facing away from the step, of the explosion-proof valve.

In one embodiment, at least one through-hole is formed in a position, a preset distance away from the outer side of the bursting line, of the explosion-proof valve, the second injection molding surface comprises a first injection molding sub-surface located on one side of the through-hole and a second injection molding sub-surface located on the other side of the through-hole, and the plastic layer penetrates through the through-hole to be secured to the first injection molding sub-surface and the second injection molding sub-surface.

In one embodiment, at least one of the second injection molding surface of the mounting opening and the first injection molding surface of the explosion-proof valve is provided with nano-porous structures.

In one embodiment, the bursting line corresponds to the periphery of the explosion-proof valve in shape.

In one embodiment, the explosion-proof valve is circular or rectangular.

In one embodiment, the cover body and the explosion-proof valve are both made from aluminum alloy.

In one embodiment, the plastic layer is made from plastic.

In one embodiment, the explosion-proof valve is made by stamping.

The embodiments of the invention have the following beneficial effects:

According to the battery cover, an explosion-proof valve is connected and fixed to a cover body by plastic to replace an existing connecting and fixing process based on laser welding in the industry, thus avoiding negative influences caused by a high temperature during the laser welding process and realizing a stable explosion-proof value, the tolerance of which can reach ±0.1MPa; and the welding process is eliminated, thus increasing the yield and reducing the manufacturing cost.

### BRIEF DESCRIPTION OF THE DRAWINGS

FIG. 1 is a schematic structural view of a battery cover according to an embodiment of the invention;
FIG. 2 is a schematic structural view of a battery cover according to an alternative embodiment of the invention, showing an explosion-proof valve in different shapes;
FIG. 3 is a schematic cross-sectional structural view of a battery cover according to a first embodiment of the invention;
FIG. 4 is a schematic cross-sectional structural view of a battery cover according to a second embodiment of the invention.

Reference signs: 1, cover body; 2, mounting opening; 3, explosion-proof valve; 4, plastic; 5, first injection molding sub-surface; 6, second injection molding sub-surface; 7, through-hole.

### DESCRIPTION OF THE EMBODIMENTS

The technical solutions of the embodiments of the invention will be clearly and completely described below in conjunction with the accompanying drawings of the embodiments of the invention. Obviously, the embodiments described below are merely illustrative ones, and are not all possible ones of the invention.

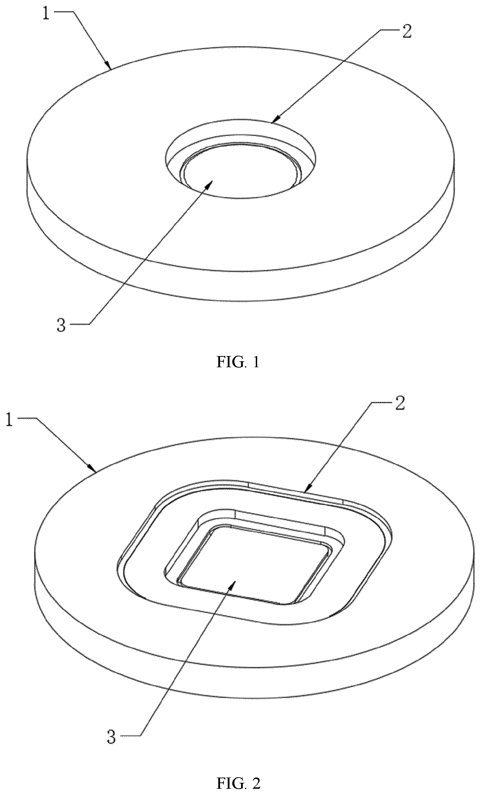

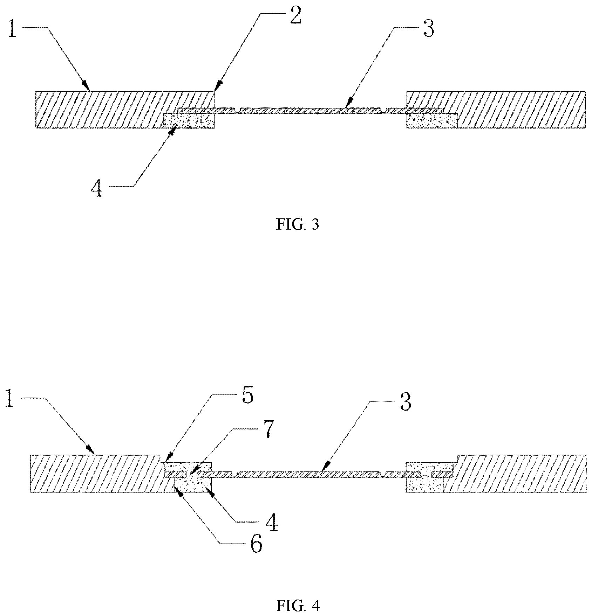

Referring to FIG. 1-FIG. 4, a battery cover connected to an explosion-proof valve by plastic according to an embodiment of the invention, comprises a cover body 1. A mounting opening 2 is formed in the cover body 1, an explosion-proof valve 3 is mounted in the mounting opening 2, and at least one bursting line is arranged on at least one surface of the explosion-proof valve 3. The explosion-proof valve 3 is provided with a first injection molding surface located on an outer side of the bursting line, a plastic layer 4 which is obtained by injection molding is arranged on the first injection molding surface and a second injection molding surface of the mounting opening 2 and seals the mounting opening 2 together with the explosion-proof valve 3. A step is arranged in the mounting opening 2, the explosion-proof valve 3 is arranged on the step, the first injection molding surface is arranged on a surface, facing away from the step, of the explosion-proof valve 3, and at least one through-hole 7 is formed in a position, a preset distance away from the outer side of the bursting line, of the explosion-proof valve 3. The second injection molding surface comprises a first injection molding sub-surface 5 located on one side of the through-hole 7 and a second injection molding sub-surface 6 located on the other side of the through-hole 7, and the plastic layer 4 penetrates through the through-hole 7 to be secured to the first injection molding sub-surface 5 and the second injection molding sub-surface 6. Connection between the cover body 1 and the explosion-proof valve 3 is realized by nano-injection molding, and a connecting and fixing process based on laser welding in the industry is replaced, thus avoiding negative influences caused by a high temperature during the laser welding process and realizing a stable explosion-proof value, the tolerance of which can reach ±0.1MPa; and the welding process is eliminated, thus increasing the yield and reducing the manufacturing cost.

At least one of the second injection molding surface of the mounting opening 2 and the first injection molding surface of the explosion-proof valve 3 is provided with nano-porous structures, which may be obtained by chemical corrosion or laser etching. The bursting line corresponds to the periphery of the explosion-proof valve 3 in shape. The explosion-proof valve 3 is circular or rectangular. The cover body 1 and the explosion-proof valve 3 are both made from aluminum alloy or the cover body 1 is be made from stainless steel, the plastic layer 4 is made from plastic, for example: PPS plastic, L7P plastic, PEEK plastic, P6T plastic or PI plastic, and the explosion-proof valve 3 is made by stamping.

The operating principle of the embodiments of the invention is as follows: the cover body 1 and the explosion-proof valve 3 are formed by stamping (indentation is not machined at this moment); then, surface chemical or physical laser processing is performed on the cover body 1 and the explosion-proof valve 3 to form nano-pores, and the explosion-proof valve is selected with a desired shape; the cover body 1 and the explosion-proof valve 3 are placed in a plastic mold to be subjected to plastic-coating nano-injection molding to form the plastic layer 4; and finally, an indentation is machined on the surface of the explosion-proof valve 3 to form the bursting line. Alternatively, the indentation may be press-formed by an injection mold during the injection molding process. The explosion-proof valve 3 is connected and fixed to the cover body 1 by the plastic layer 4 to replace an existing connecting and fixing process based on laser welding in the industry, thus avoiding negative influences caused by a high temperature during the laser welding process and realizing a stable explosion-proof value, the tolerance of which can reach ±0.1MPa; and the welding process is eliminated, thus increasing the yield and reducing the manufacturing cost.

Preferred specific implementations of the embodiments of the invention are described above, and the protection scope of the invention is not limited to the above description. All equivalent substitutions or transformations made by any skilled in the art according to the technical solutions and concepts of the embodiments of the invention within the technical scope disclosed by the invention should fall within the protection scope of the invention.

## Claims

1. A battery cover connected to an explosion-proof valve by plastic, comprising a cover body, wherein a mounting opening is defined in the cover body, the explosion-proof valve is mounted in the mounting opening, at least one bursting line is arranged on at least one surface of the explosion-proof valve, the explosion-proof valve is provided with a first injection molding surface located on an outer side of the bursting line, and a plastic layer obtained by injection molding is arranged on the first injection molding surface and a second injection molding surface of the mounting opening and seals the mounting opening together with the explosion-proof valve.

2. The battery cover connected to an explosion-proof valve by plastic according to Claim 1, wherein the mounting opening is provided with a step, the explosion-proof valve is arranged on the step, and the first injection molding surface is arranged on a surface, facing away from the step, of the explosion-proof valve.

3. The battery cover connected to an explosion-proof valve by plastic according to Claim 1, wherein at least one through-hole is formed in a position, a preset distance away from the outer side of the bursting line, of the explosion-proof valve, the second injection molding surface comprises a first injection molding sub-surface located on one side of the through-hole and a second injection molding sub-surface located on the other side of the through-hole, and the plastic layer penetrates through the through-hole to be secured to the first injection molding sub-surface and the second injection molding sub-surface.

4. The battery cover connected to an explosion-proof valve by plastic according to any one of Claims 1-3, wherein at least one of the second injection molding surface of the mounting opening and the first injection molding surface of the explosion-proof valve is provided with nano-porous structures.

5. The battery cover connected to an explosion-proof valve by plastic according to any one of Claims 1-3, wherein the bursting line corresponds to the periphery of the explosion-proof valve in shape.

6. The battery cover connected to an explosion-proof valve by plastic according to any one of Claims 1-3, wherein the explosion-proof valve is circular or rectangular.

7. The battery cover connected to an explosion-proof valve by plastic according to any one of Claims 1-3, wherein the cover body and the explosion-proof valve are both made from aluminum alloy.

8. The battery cover connected to an explosion-proof valve by plastic according to any one of Claims 1-3, wherein the plastic layer is made from plastic.

9. The battery cover connected to an explosion-proof valve by plastic according to any one of Claims 1-3, wherein the explosion-proof valve is made by stamping.
